# EUROPÄISCHE PATENTSCHRIFT

(11) **EP 0 503 424 B1**
(45) Veröffentlichungstag und Bekanntmachung des Hinweises auf die Patenterteilung: **31.05.1995**
(21) Anmeldenummer: 92103541.6
(22) Anmeldetag: 02.03.1992
(51) Int. Cl.: F16F 15/16, F16H 57/00

(54) **Mit einer Riemenscheibe verbundener Drehschwingungsdämpfer**
Torsional vibration damper integrated into a pulley
Amatisseur de vibrations en torsion lié avec poulie

(30) Priorität: 12.03.1991 DE 4107880
(43) Veröffentlichungstag der Anmeldung: 16.09.1992
(73) Patentinhaber: HASSE & WREDE GmbH, D-12347 Berlin (DE)
(72) Erfinder: Friedrichs, K. Gerd, W-8432 Beilngries (DE); Pape, Rolf, W-1000 Berlin 37 (DE)

(56) Entgegenhaltungen:
- EP-A- 0 286 787
- WO-A-90/13758
- AT-B- 384 088
- GB-A- 650 891
- US-A- 2 594 555
- US-A- 2 636 399

## Beschreibung

Die Erfindung betrifft einen Drehschwingungsdämpfer nach dem Gattungsbegriff des Patentanspruches 1.

Bei einem Verbrennungsmotor treten in der Kurbelwelle sowie am Ende der Kurbelwelle Biege- und Drehschwingungen auf. Um diese Schwingungen auf ein unschädliches Maß zu begrenzen, wird am Ende der Kurbelwelle ein sogenannter Drehschwingungsdämpfer, auch Schwingungstilger genannt, angebracht. Üblicherweise handelt es sich bei diesem Schwingungstilger um einen Gummi- oder Viskotilger, der endseitig auf die Kurbelwelle aufgeschraubt oder gesteckt oder über die Riemenscheibe mit der Kurbelwelle verbunden wird. Schwingungstilger auf der Grundlage viskoser Dämpfungselemente werden auch als Viskotilger bezeichnet. Ein nach dem sogenannten Scherfilmprinzip arbeitender Viskotilger ist aus der EP-O 302 283 A2 bekannt. Dieser bekannte Viskotilger umfaßt ein ringkanalförmiges Gehäuse als Arbeitskammer, die durch einen Deckel verschlossen ist. In der Arbeitskammer ist ein seismischer Ring angeordnet und der zwischen dem Ring und der Arbeitskammer verbleibende Raum ist mit einem viskosen Dämpfungsmedium gefüllt.

Bekannt sind aus Drehschwingungsdämpfer und Riemenscheibe zusammengefügte Anordungen der gattungsgemäßen Art (US-PS 2,636,399), bei welchen eine Riemenscheibe seitlich am Drehschwingungsdämpfer angesetzt ist. Der bauliche Aufwand derartiger Konstruktionen ist beträchtlich, d.h. die Riemenscheibe ist als ein massives Teil ausgebildet, an welchem unter Beanspruchung axialen Bauraums seitlich der Drehschwingungsdämpfer angesetzt ist. Fernerhin ist es bekannt (US-PS 2,594,555; Figur 4), das Nutzprofil der Profilscheibe bei einer Kombination aus Gummitilger und Riemenscheibe am Außenumfang des Gummitilgers vorzusehen. Der Riemenscheibenaufbau dieser Art ist indessen weitgehend durch die funktionellen Gegebenheiten und Bedingungen des Gummitilgers beeinflußt, da es aus Gründen ausreichender Kühlung im besonderen nötig ist, den Riemenscheibenkörper einseitig offen zu gestalten.

Davon ausgehend besteht die Aufgabe der Erfindung darin, einen mit einer Riemenscheibe verbundenen Drehschwingungsdämpfer der gattungsgemäßen Art in konstruktiv einfacher Weise so aufzubauen, daß insbesondere der Bauraum für die Arbeitskammer und das benötigte Nutzprofil für die Riemenscheibe in einer kompakten Einheit verwirklicht sind. Es soll gleichzeitig eine baulich einfache Anbindung dieser Einheit in den Flanschbereich ermöglicht sein, welcher zur Verbindung mit dem zu bedämpfenden Maschinenteil vorgesehen ist.

Zur Lösung dieser Aufgabe dienen die Merkmale nach dem Kennzeichnungsteil des Patentanspruches 1.

Bei baulicher Integration des Viskositäts-Drehschwingungsdämpfers mit der Riemenscheibe ist der Vorteil erzielbar, daß innerhalb kompakter Baumaße volle Funktionsfähigkeit beider Aggregate gewährleistet ist; durch die baulich vollständige Vereinigung des in sich geschlossenen Viskositäts-Drehschwingungsdämpfers mit der Riemenscheibe ist ein sehr ruhiger Lauf dieser Kombination erreichbar. Vorzugsweise wird das Profil von Riemenscheibe und Viskositäts-Drehschwingungsdämpfer, also das Gehäuse in seiner Gesamtheit, im Kaltverformungsverfahren z.B. Kaltrollen gefertigt, wobei der seitlich angesetzte Deckel in an sich bekannter Weise durch Schweißverbindungen etc. am Gehäuse befestigbar ist.

Vorteilhafte Ausgestaltungen und Weiterbildungen sind in weiteren Patentansprüchen aufgeführt.

Die Erfindung ist nachfolgend anhand von Ausführungsbeispielen unter Bezugnahme auf die beigefügte Zeichnung erläutert.
Fig.1 ist eine halbierte Schnittansicht einer nicht in den Schutzumfang des Patenanspruches 1 fallenden Ausführungsform eines mit einer Riemenscheibe verbundenen Drehschwingungsdämpfers ;
Fig.2 und 3 sind halbierte Schnittansichten zweier Ausführungsformen des mit einer Riemenscheibe verbundenen Drehschwingungsdämpfers gemäß der Erfindung.

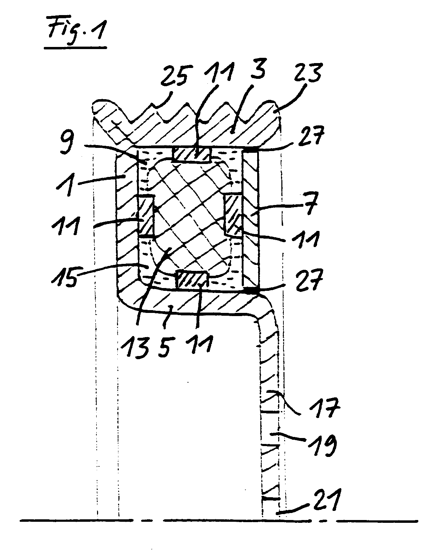

Die in Figur 1 der Zeichnung dargestellte, nicht in den Schutzumfang des Patentanspruches 1 fallende Anordnung aus Viskositäts-Drehschwingungsdämpfer und Riemenscheibe weist ein Gehäuse 1 auf, welches einstückig ausgebildet ist; das Gehäuse ist z.B. aus Stahlblech oder einem anderen geeigneten Werkstoff gefertigt, vorzugsweise in einem Kaltformverfahren. Das Gehäuse 1 umschließt mit einem Außenmantel 3 und einem Innenmantel 5 zusammen mit einem seitlich zu befestigenden Deckel 7 eine Arbeitskammer 9, in welcher sich eine von Abstandshaltern 11 gegenüber der Innenwand des Gehäuses 1 abgestützte seismische Masse 13 befindet. Die Abstandshalter 11 können z.B. aus Kunststoff bestehen und weisen geringen Reibungswiderstand auf. Der verbleibende Raum zwischen der seismischen Masse 13 und den Innenwänden der Arbeitskammer 9 ist mit einem viskosen Dämpfungsmedium 15 gefüllt. Am Innenumfang des Gehäuses 1 befindet sich ein Befestigungsflansch 17 mit Schraubenlöchern 19. Die Schraubenlöcher dienen zu Aufnahme von (nicht gezeigten Schrauben), mit welchen die Anordnung aus Viskositäts-Drehschwingungsdämpfer und Riemenscheibe an einem rotierenden Maschinenteil, z.B. einer zu bedämpfenden Kurbelwelle angeschraubt oder sonstwie in Verbindung gebracht werden kann. Die Mittenöffnung 21 kann einen Zentrieransatz oder dgl. des zu bedämpfenden Maschinenteils aufnehmen. Es sind grundsätzlich keine Beschränkungen hinsichtlich der Art der Befestigung am zu bedämpfenden Maschinenteil vorgesehen.

Der Außenmantel 3 des Viskositäts-Drehschwingungsdämpfers nach Fig.1 ist als Profilring 23 ausgebildet, welcher einen Teil des Drehschwingungsdämpfers bzw. dessen Arbeitskammer 9 bildet und gleichzeitig zur Aufnahme eines Treibriemens von an sich bekannter Art dient. Der Profilring 23 ist materialeinheitlich mit dem Gehäuse 1 ausgebildet, wobei das Profil vorzugsweise aus einem sogenannten Poly-V-Profil 25 besteht. Der Deckel 7 erstreckt sich in radialer Lage zwischen dem Innenmantel 5 und dem aus dem Profilring 23 gebildeten Außenmantel 3 und ist beispielsweise durch Schweißverbindungen 27 mit den genannten Bauteilen verbunden.

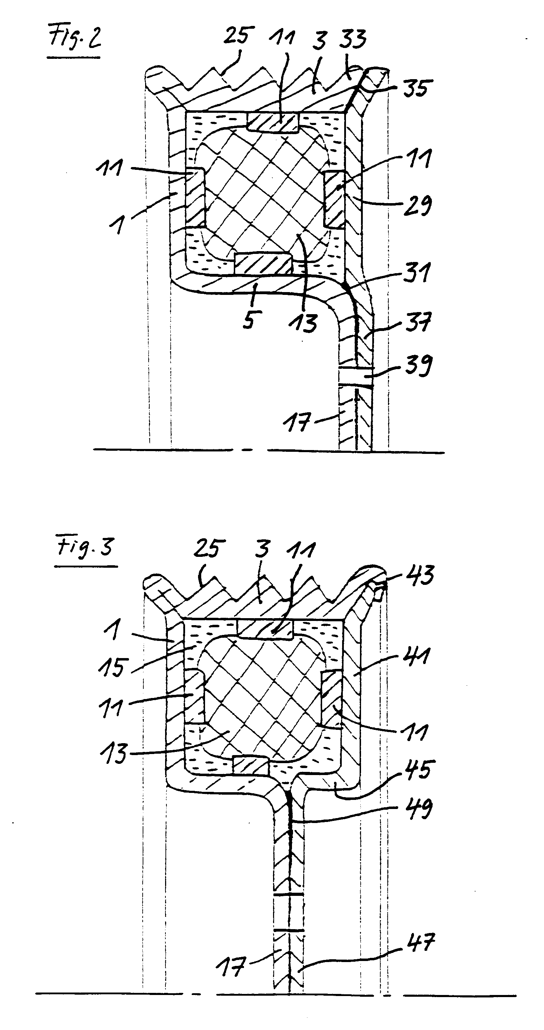

Die in den Fig.2 und 3 dargestellten erfindungsgemäßen Ausführungsformen unterscheiden sich von der nicht in den Schutzumfang des Patenanspruchens 1 fallenden Anordung nach Fig.1 hinsichlich unterschiedlicher Ausgestaltung des Verschlusses der Arbeitskammer und der Position des Befestigungsflansches bezüglich der Achsmitte des Gehäuses. Bei der in Fig.2 wiedergegebenen Ausführungsform nach der Erfindung ist ein scheibenförmiger Deckel 29 vorgesehen, der in seinem Anlagebereich am Gehäuse 1 durch Verlöten oder Schweißen fest mit diesem verbunden ist, wie die Schweißnaht 31 in Figur 2 aufzeigt. Der Deckel 29 weist im wesentlichen denselben Durchmesser auf wie die Einheit aus Viskositäts-Drehschwingungsdämpfer und Riemenscheibe und ist zumindest am außenliegenden Ende der im Querschnitt schräg verlaufenden Kontur des außenliegenden Schenkels 33 des Poly-V-Profils angepaßt. Hier ist eine weitere Lötnaht bzw. Schweißnaht 35 zur Verbindung des Deckels mit dem Schenkel 33 vorgesehen.

In gleicher Weise wie das Gehäuse 1 weist auch der Deckel 29 gemäß den Figuren 2 und 3 einen radial innenseitigen Befestigungsflansch 37 auf, welcher planparallel zum Befestigungsflansch 17 verlaufend, wie dieser von auf einem Teilkreis angeordneten Schraubenlöchern 39 zur Aufnahme von (nicht dargestellten) Befestigungsschrauben durchsetzt ist. Es kann auch eine Mittenöffnung vorgesehen sein, welche zur Zentrierung der Einheit aus Viskositäts-Drehschwingungsdämpfer und Riemenscheibe dient.

Bei der erfindungsgemäßen Ausführungsform nach Fig.3 ist in Abwandlung der in Fig.2 dargestellten Anordung ein Deckel 41 vorgesehen, welcher an seinem Außenumfang mittels einer Bördelung 43 mit dem Poly-V-Profil verbunden ist und im Bereich der Innenseite der Arbeitskammer eine nach innen gerichtete Kröpfung 45 aufweist. Hierdurch ist der Bereich der beiden Befestigungsflansche 17 und 47 etwa zentralmittig bzgl. der Mittenachse der Arbeitskammer ausgerichtet. Wie im Falle der Ausführungsform nach Fig.2 ist eine innenseitige Verlötung oder Verschweißung 49 im Bereich der beiden Befestigungsflansche vorgesehen. Grundsätzlich können auch andere Arten der Befestigung des Deckels am Gehäusekörper zur Anwendung gelangen, es können z.B. Punktschweißverbindungen, Klebeverbindungen oder dgl. Verbindungsverfahren benutzt werden. Den Ausführungsformen nach Fig.2 und 3 ist gemeinsam, daß durch die scheibenförmige Ausgestaltung des Deckels 29 bzw. 41 eine ausgezeichnete Stabilität im Bereich der radial innenseitigen Befestigungsflansche und somit eine verbesserte bauliche Stabilität der gesamten Einheit aus Viskositäts-Drehschwingungsdämpfer und Riemenscheibe gebildet ist.

## Patentansprüche

1. Mit einer Riemenscheibe verbundener Drehschwingungsdämpfer, mit einem eine Arbeitskammer umschließenden Dämpfergehäuse (1), welches mit einem zu bedämpfenden Maschinenteil verbindbar ist, wobei der Drehschwingungsdämpfer als ein Viskositäts-Drehschwingungsdämpfer besteht, der in den Umfangsbereich der Riemenscheibe integriert ist, deren Außenmantel als Profilring (23) für ein einen Riemen in Eingriff gelangendes Nutzprofil ausgebildet ist, wobei das Gehäuse (1) des Viskositäts-Drehschwingungsdämpfer als ein einstückig und materialeinheitlich mit der Riemenscheibe ausgebildetes, im Querschnitt U-förmiges Teilprofil gebildet ist, das mit seiner Öffnung in eine der beiden axialen Richtungen der Riemenscheibe zeigt, wobei der radial innere der beiden Schenkel des U-förmigen Teilprofils in einen scheibenförmigen, zentralen und als Befestigungsflansch (17) dienenden Bereich der Riemenscheibe übergeht, und wobei die offene Seite des U-förmigen Teilprofils durch einen scheibenförmigen Deckel (29;41) verschlossen ist, der im wesentlichen den gleichen Außendurchmesser wie die Einheit aus Drehschwingungsdämpfer und Riemenscheibe aufweist, dadurch gekennzeichnet, daß der radial äußere Schenkel der Arbeitskammer den Profilring (23) ausbildet, so daß die Arbeitskammer radial innerhalb des Profilringes (23) angeordnet ist, und der Deckel (29;41) im Bereich seines Innenumfanges einen Befestigungsflansch (37,47) bildet, welcher mit dem zugewandten Befestigungsflansch (17) des Teilprofils verbunden ist.

2. Mit einer Riemenscheibe verbundener Drehschwingungsdämpfer nach Anspruch 1, dadurch gekennzeichnet, daß das am Profilring (23) ausgebildete Nutzprofil ein im Kaltrollverfahren gefertigtes Poly-V-Profil (25) ist.

3. Mit einer Riemenscheibe verbundener Drehschwingungsdämpfer nach einem der vorangehenden Ansprüche, dadurch gekennzeichnet, daß der Deckel (29;41) mittels einer Schweißverbindung mit dem U-förmigen Teilprofil verbunden ist.

4. Mit einer Riemenscheibe verbundener Drehschwingungsdämpfer nach einem der vorangehenden Ansprüche, dadurch gekennzeichnet, daß sich im Inneren der Arbeitskammer (9) eine durch Abstandshalter (11) geführte seismische Masse (13) befindet, und daß ein viskoses Dämpfungsmedium die seismische Masse umgibt.

5. Mit einer Riemenscheibe verbundener Drehschwingungsdämpfer nach einem der vorangehenden Ansprüche, dadurch gekennzeichnet, daß das Gehäuse (1) und der Deckel (29;41) durch Kaltverformung gefertigt sind.

## Claims

1. Torsional vibration damper connected to a belt pulley, having a damper housing (1) surrounding a working chamber, which can be joined to a machine part to be damped, the torsional vibration damper being a viscosity torsional vibration damper which is integrated into the peripheral region of the belt pulley, its outer casing being formed as a profile ring (23) for a working profile in engagement with a belt, the housing (1) of the viscosity torsional vibration damper being formed as a partial profile integral with, and of the same material as, the belt pulley, U-shaped in cross-section, and pointing with its aperture into one of the two axial directions of the belt pulley, wherein the radially inner of the two arms of the U-shaped partial profile merges into a disc-shaped central region of the belt pulley used as a securing flange (17), and wherein the open side of the U-shaped partial profile is sealed by a disc-shaped cover (29; 41) which has substantially the same outer diameter as the unit comprising the torsional vibration damper and the belt pulley, characterised in that the radially outer arm of the working chamber forms the profile ring (23) so that the working chamber is arranged radially inside the profile ring (23), and in the region of its inner circumference the cover (29; 41) forms a securing flange (37, 47) which is connected to the facing securing flange (17) of the partial profile.

2. Torsional vibration damper connected to a belt pulley according to claim 1, characterised in that the working profile formed on the profile ring (23) is a multi-V-profile (25) produced by cold-rolling.

3. Torsional vibration damper connected to a belt pulley according to one of the preceding claims, characterised in that the cover (29; 41) is connected by means of a welded joint to the U-shaped partial profile.

4. Torsional vibration damper connected to a belt pulley according to one of the preceding claims, characterised in that inside the working chamber (9) there is a seismic mass (13) guided by spacers (11), and in that a viscous damping medium encloses the seismic mass.

5. Torsional vibration damper connected to a belt pulley according to one of the preceding claims, characterised in that the housing (1) and the cover (29; 41) are produced by cold forming.

## Revendications

1. Amortisseur de vibrations de torsion relié à une poulie, comportant un carter d'amortisseur (1) enfermant une chambre de travail, le carter pouvant être relié à un élément de machine à amortir, l'amortisseur de vibrations de torsion étant constitué d'un visco-amortisseur de vibrations de torsion intégré dans la zone périphérique de la poulie dont l'enveloppe extérieure est réalisée sous forme d'un anneau profilé (23) pour un profil utile entrant en engagement avec une courroie, le carter (1) du visco-amortisseur de vibrations de torsion étant réalisé sous forme d'un profilé partiel en U faisant corps avec la poulie et réalisé à partir de la même matière que celle-ci, et dont l'ouverture est dirigée dans l'une des deux sens axiaux de la poulie, le côté radialement intérieur des deux côtés du profilé partiel en U rejoignant une zone centrale de la poulie servant de bride de fixation (17), et le côté ouvert du profilé partiel en U étant obturé par un couvercle (29; 41) en forme de disque, qui présente essentiellement le même diamètre extérieur que l'unité composée de l'amortisseur de vibrations de torsion et de la poulie,
caractérisé en ce que le côté radialement extérieur de la chambre de travail constitue l'anneau profilé (23), de manière que la chambre de travail se situe radialement à l'intérieur de l'anneau profilé (23), et que le couvercle (29; 41) définit, au niveau de sa périphérie intérieure, une bride de fixation (37, 47) qui est reliée à la bride de fixation (17) du profilé partiel, qui lui fait face.

2. Amortisseur de vibrations de torsion relié à une poulie selon la revendication 1, caractérisé en ce que le profil utile ménagé au niveau de l'anneau profilé (23) est un profil en poly-V (25) façonné par un procédé de laminage à froid.

3. Amortisseur de vibrations de torsion relié à une poulie selon l'une des revendications précédentes, caractérisé en ce que le couvercle (29; 41) est relié au profilé partiel en forme de U par l'intermédiaire d'une soudure.

4. Amortisseur de vibrations de torsion relié à une poulie selon l'une des revendications précédentes, caractérisé en ce qu'à l'intérieur de la chambre de travail (9) se trouve une masse sismique (13) guidée dans des entretoises (11), et en ce qu'un fluide amortisseur visqueux entoure la masse sismique.

5. Amortisseur de vibrations de torsion relié à une poulie selon l'une des revendications précédentes, caractérisé en ce que le carter (1) et le couvercle (29; 41) sont réalisés par façonnage à froid.
